# EUROPEAN PATENT SPECIFICATION

(11) **EP 3 891 544 B1**
(45) Date of publication and mention of the grant of the patent: **09.12.2026**
(21) Application number: 19704239.3
(22) Date of filing: 30.01.2019
(51) Int. Cl.: G02B 7/02, F03G 7/06

(54) **SHAPE-MEMORY DRIVEN LINEAR ACTUATOR AND OPTICAL SYSTEM WITH SUCH LINEAR ACTUATOR**
FORMGEDÄCHTNISGESTEUERTER LINEARAKTUATOR UND OPTISCHES SYSTEM MIT EINEM SOLCHEN LINEARAKTUATOR
ACTIONNEUR LINÉAIRE COMMANDÉ À MÉMOIRE DE FORME ET SYSTÈME OPTIQUE POURVU D'UN TEL ACTIONNEUR LINÉAIRE

(43) Date of publication of application: 13.10.2021
(73) Proprietor: Huawei Technologies Co., Ltd., Shenzhen Guangdong 518129 (CN)
(72) Inventor: EROMAKI, Marko, 16440 Kista (SE)
(74) Representative: Maiwald GmbH
(86) International application number: PCT/EP2019/052285
(87) International publication number: WO 2020/156664

(56) References cited:
- WO-A1-2018/158590
- WO-A1-2018/158590
- JP-A- 2007 240 597
- JP-A- 2007 240 597
- US-A1- 2014 130 492
- US-A1- 2014 130 492

## Description

### TECHNICAL FIELD

The disclosure relates to a linear actuator comprising a drive member coupled to elongated Shape-Memory Alloy (SMA) members for driving a lens or a lens group of an optical system, and to an optical system comprising such actuator.

### BACKGROUND

US2014/130492A1 describes that a linear motion device includes a rod extending along a longitudinal axis, and a plurality of actuator units. Each of the plurality of actuator units includes at least one Shape Memory Alloy (SMA) element that is attached to a coupling mechanism. It is described that the at least one SMA element of each if the plurality of actuator units moves the coupling mechanism along the longitudinal axis, and into grasping engagement with the rod. It is described that each actuator unit moves the rod a unit movement distance along the longitudinal axis in response to a control signal. It is described that the plurality of actuator units are actuated repeatedly in a cyclic order to move the rod in a continuous linear motion a distance greater than the unit movement distance of each of the plurality of actuator units.

Piezo (SIDM) and VCM (magnet-coil) based actuation systems are used in the art to drive two or more lens groups in traditional optical systems, such as e.g. zoom cameras. These typically require long travel distances (several millimeters) depending on the zoom factor, and two or more actuators are typically needed for discretely moving lens groups (zoom, focus).

Some imaging applications need long stroke actuators to work. Especially, optical zoom applications, which have two or more moving lens groups and travels of 5-7 mm for each. Presently, (stepper) motors with lead screws and piezo actuators (SIDM, Squiggle) are used as common actuators. However, these actuators have certain demerits, namely price (especially piezo) and audible noise (as they exhibit high pitch 30-40 dBA level noise interfering with sensitive microphones). Size and form factor are also important when selecting suitable actuators for optical zoom cameras as their native size will become large.

In optical zoom cameras, piezo (SIDM) and VCM (magnet-coil) based actuation systems are used to drive two or more lens groups, at least one group for zoom and one group for focus. Such arrangements typically require long travel distances, e.g. several millimetres, depending on the zoom factor, and two or more actuators are typically needed for discretely moving the lens groups for zoom and focus, respectively. Furthermore, such arrangements are space consuming, slow, and noisy, as they comprise moving the actual lens.

Thus, these known prior art actuators have several demerits, namely price (especially piezo) and audible noise (as they exhibit high pitch 30-40 dBA level noise interfering with sensitive microphones). Size and for factor are also important when selecting suitable actuators for optical zoom cameras as their native size will become large.

### SUMMARY

It is an object to overcome or at least to reduce the drawbacks of the prior art mentioned above.

The foregoing and other objects are achieved by the features of the independent claims. Further implementation forms are apparent from the dependent claims, the description and the figures.

The following aspects and implementations of the summary provide examples of how technical subject matters can be combined.

According to a first aspect, there is provided an actuator for driving a lens of an optical system, the actuator comprising: a housing, a drive member, at least a first elongated SMA member and a second elongated SMA member,
the first elongated SMA member being connected mechanically and electrically both:
at a first position to the housing, and
at the first attachment position to the drive member,
the second elongated SMA member being connected mechanically and electrically both:
   at a second position to the housing the second position being different from the first position, and
   at a second attachment position to the drive member,
   a rod with a side surface, the rod being slidably received in a channel of the housing, a controller configured to contract and thereafter expand the first and second elongated SMA members sequentially for imparting cycling movement on the drive member by sequentially conducting electric current through the first and second elongated SMA members,
   the drive member being in intermittent frictional contact with the side surface of the rod during the cyclic movement, whereby the cyclic movement of the drive member causes linear movement of the rod.

By controlling the position of the drive member through elongated SMA members and by controlling this position such that the drive member is in intermittent contact with the side surface of the rod, the rod can stepwise be linearly involved, with generating little or no noise. Further, the through the use of SMA members, little or no electromagnetic interference is caused to adjacent systems, such as e.g. cameras or speakers. Further, the actuator provides for a small size and in good form factor, which can facilitate minimizing of the width of a camera unit. Further, the actuator is relatively inexpensive since the production of elongated SMA members is relatively inexpensive and the remaining parts can be injection molded together with terminal connections resulting in a low number of part and low production and assembly costs. Further, the actuator can be constructed robust and reliable since there is no requirement use glues (which is required in some designs) and avoids the use of small gear wheels, such as required in connection with VCM (magnet-coil) motors.

According to the invention, the actuator comprises a friction member resiliently urged into contact a side surface of the rod. This friction element ensures that the rod is kept in position when the drive member is not in contact with the rod.

According to the invention, friction between the friction member and the side surface of the rod is less than friction between the drive member and the side surface of the rod when the drive member is in contact with the rod. Thus, it is ensured that the drive member can overcome the force created by the friction of the friction member.

In a possible implementation form of the first aspect the actuator comprises a resilient element connected to the housing at a specific position and to the drive member for urging the drive member in a direction at an angle to the longitudinal extent of both the first elongated SMA member and the second elongated SMA member, or the drive member being resilient and being resiliently biased by its resilience in a direction at an angle to the longitudinal extent of both the first elongated SMA member and the second elongated SMA member. Thus, each of the required direction of motion is ensured for the drive member.

In a possible implementation form of the first aspect the actuator the controller is electrically connected to the first attachment position, to the second attachment position, to the first position and to the second position. Thus, the controller is enabled to conduct electrical current individually to each of the elongated SMA members.

In a possible implementation form of the first aspect the first elongated SMA member is arranged at an angle to the second SMA member. Thus, the direction of movement of the drive member when the SMA member concerned contracts is determined.

In a possible implementation form of the first aspect the actuator comprises a third elongated SMA member, the third elongated SMA member being connected mechanically and electrically both:
at a third position to the housing, the third position being different from the first position and the second position, and
at a third attachment position on the drive member,
the controller being electrically connected to the third position, and
the controller being configured contract and thereafter expand the first, second and third elongated SMA members sequentially for imparting cyclic movement on the drive member by sequentially conducting electric current through the first, second and third elongated SMA members. With a third elongated SMA member the degrees of freedom of motion of the drive member are increased.

In a possible implementation form of the first aspect the third elongated SMA member is arranged at an angle to first SMA member and at an angle to the second SMA member. Thus, the required direction of movement of the drive member is ensured when the third elongated SMA member contracts.

In a possible implementation form of the first aspect the actuator comprises a fourth elongated SMA member, the fourth elongated SMA member being connected mechanically and electrically both:
at a fourth position to the housing, the fourth position being different from the first position, the second position and the third position, and
at a fourth attachment position on the drive member,
the controller being electrically connected to the fourth position, and
the controller being configured contract and thereafter expand the first, second, and fourth third elongated SMA members sequentially for imparting cyclic movement on the drive member by sequentially conducting electric current through the first, second, third and fourth elongated SMA members. With a fourth elongated SMA member the degrees of freedom of motion of the drive member are increased.

In a possible implementation form of the first aspect the fourth elongated SMA member is arranged at an angle to first SMA member, at an angle to the second SMA member and at an angle to the third SMA member. Thus, the required direction of movement of the drive member is ensured when the fourth elongated SMA member contracts.

In a possible implementation form of the first aspect the first position, the second position, the third position and/or the fourth position are at a radial distance from an axis through the cyclic movement. Thus, the elongated SMA members are arranged at a sufficient distance from the center of the cyclic movement.

In a possible implementation form of the first aspect the first attachment position, the second attachment position, the third attachment position and/or the fourth attachment position are at one and the same location on the drive member. Thus, all of the SMA members converge to a single point on the drive member, thereby facilitating electrical connection and mechanical connection of the SMA members.

In a possible implementation form of the first aspect the drive member is provided with a surface area for contact with the side surface of the rod, the surface area and the side area each being provided with a material for creating friction during contact between the surface area and the side area. Thus, sufficient friction between the drive member and the side surface of the rod is ensured, as well as sufficient durability of the components involved.

In a possible implementation form of the first aspect the actuator a flexible electrical connection to the first, second, third and/or fourth attachment point. Thus, the electrical connection can be established to the attachment points.

In a possible implementation form of the first aspect the
shape-memory alloy (SMA) members are SMA wires.

In a possible implementation form of the first aspect the linear movement of the rod is imparted stepwise.

In a possible implementation form of the first aspect resilient member applies a pulling force to the drive member.

In a possible implementation form of the first aspect the resilient member applies a pulling force to the drive member.

According to a second aspect there is provided an optical system comprising a lens arrangement, the lens arrangement being actuated by an actuator according to the first aspect or any implementation thereof.

These and other aspects will be apparent from and the embodiment(s) described below.

### BRIEF DESCRIPTION OF THE DRAWINGS

In the following detailed portion of the present disclosure, the aspects, embodiments and implementations will be explained in more detail with reference to the example embodiments shown in the drawings, in which:
Fig. 1 shows a diagrammatic view on an optical system with lens arrangements,
Fig. 2 is an elevated view of a linear actuator according to the present disclosure,
Fig. 3 is another elevated view of the linear actuator of Fig. 2,
Fig. 4 is a diagrammatic representation of a linear actuator according to the present disclosure,
Fig. 5 is a diagrammatic representation of a controller for use with a linear actuator according to the present disclosure,
Fig. 6 is a diagrammatic representation of an embodiment of a linear actuator with four SMA wires,
Fig. 7 is a schematic representation of the actuator according to Fig. 6,
Fig. 8 is a diagrammatic representation of another embodiment of a linear actuator with three SMA wires,
Fig. 9 is a schematic representation of the actuator according to Fig. 8,
Fig. 10 is a diagrammatic representation of another embodiment of a linear actuator with three SMA wires,
Fig. 11 is a schematic representation of the actuator according to Fig. 10,
Fig. 12 is a diagrammatic representation of another embodiment of a linear actuator with two SMA wires,
Fig. 13 is a schematic representation of the actuator according to Fig. 12, and
Fig. 14 is a schematic representation of the actuator according to Fig. 12 with a resilient member arranged differently.

### DETAILED DESCRIPTION

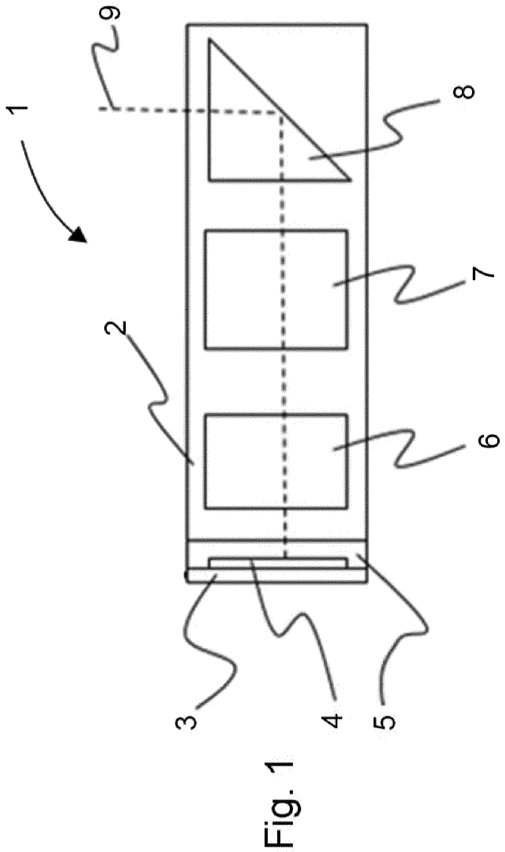

Fig. 1 shows an optical system in the form of a zoom camera 1 having a housing 2, provided with a substrate 3 on which an image sensor 4 is arranged under a sensor cover 5. The image sensor 4 is arranged at a right angle to an internal optical axis. A first lens group 6 for adjusting the focus, a second lens group 7 for adjusting zoom are arranged along the internal optical axis as well as and a prism 8 that folds the axis of the incoming light 9.

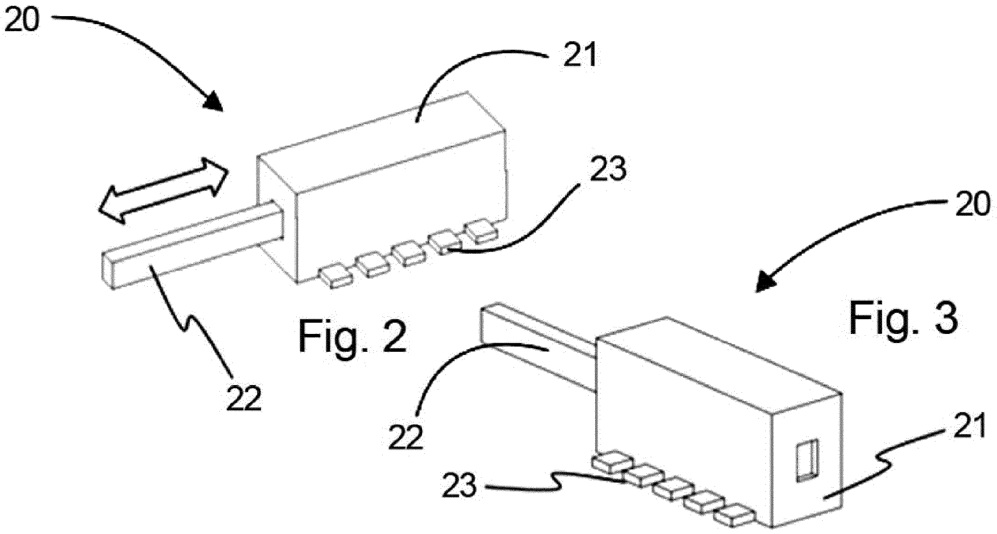

An embodiment of a linear actuator 20 is shown in Figs. 2 and 3 in different perspective views. The camera 1 is provided with two linear actuators 20, with one linear actuator 20 operatively connected to the first lens group 6 and another linear actuator 20 connected to the second lens group 7. The linear actuator 20 comprises a housing 21 and a linearly movable rod 22 that at least partially extends from the housing, as well as electrical contacts 23.

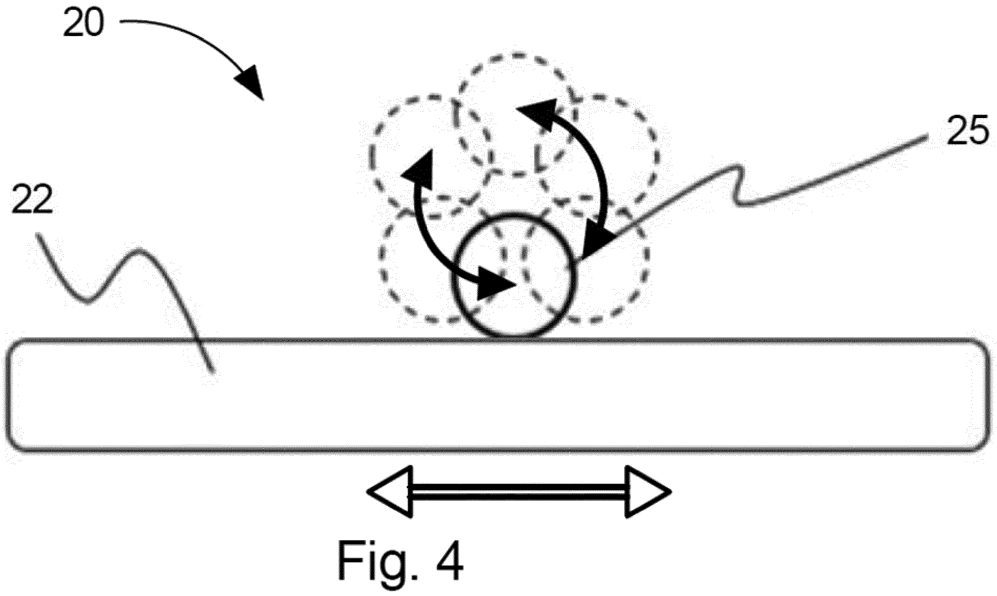

Fig. 4 illustrates the principle behind the operation of the linear actuator 20. The linearly movable rod 22 is in intermittent contact with a drive member 25. The drive member 25 is moved in a cyclic motion illustrated by the curved arrows and is in intermittent contact with a side of the rod 22 during the cyclic movement. The cited motion is a roughly circular motion, such e.g. a pattern of motion that follows the shape of a polygon.

The intermittent contact during the cyclic movement causes the rod 22 to make incremental linear movements. Hereto, the friction between the outer surface of the drive member 25 that is in contact with the side surface of the rods 22 needs to be sufficient for transferring a force parallel to the direction longitudinal extend of the rod 22. Hereto, at least a portion of the drive member 25 that comes in rubbing contact with the side surface of the rod 22 is a material with a relatively high friction coefficient, such as e.g. elastomeric material, e.g. natural and/or artificial rubber. Typically, the surface of the rod that comes in contact with the channel 24 and with the drive member 25 is formed by material that have a relatively low friction coefficient, such as e.g. hard polymer material or metal for allowing the rods 22 to slide in the channel 24.

The resulting direction of movement of the rod 22 (shown by the double arrow below rod 22) will depend on the direction of the cyclic movement (clockwise or anticlockwise) of the drive member 25, as illustrated by the arrows in Fig. 4. Thus, clockwise cyclic movement of the drive member 25 will result in the rod 22 moving incrementally to the left with each cycle (clockwise and left as in Fig. 4) and anticlockwise cyclic movement of the drive member 25 will result in the rod 22 moving incrementally to the right with each cycle (anticlockwise and right as in Fig. 4).

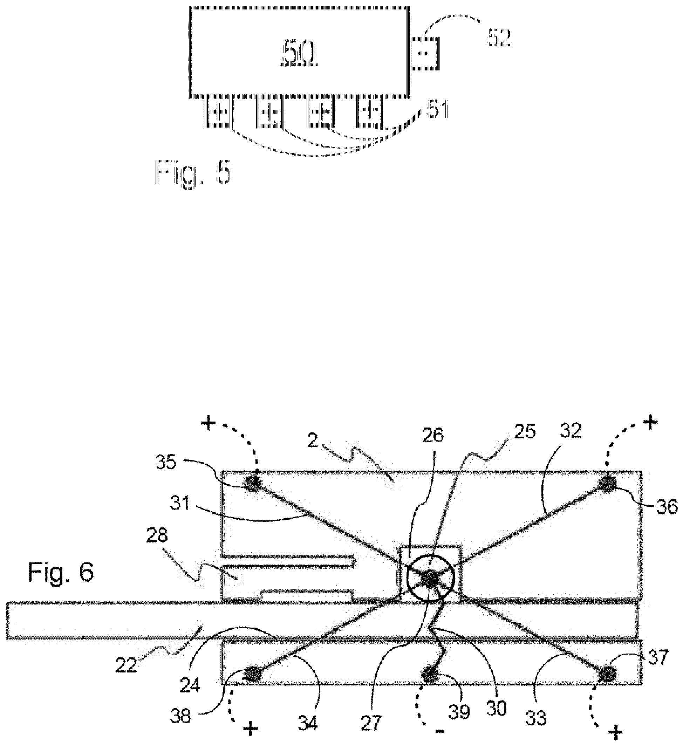

Fig. 5 is a diagrammatic representation of a controller 50 with its positive electrical contacts 51 and its negative electrical contact 52. The controller 50 is configured for operating the linear to 20, as will be described in greater detail further below.

In an embodiment the controller 50 comprises a processor or circuitry configured for performing the required operation.

Fig. 6 shows an embodiment of the linear actuator 20 in a diagrammatic and partially cut open view. The housing 2 is provided with a channel 24 in which the rod 22 is slidably received to allow the rod 22 to make a linear movement relative to the housing 2.

The housing 2 is also provided with a hollow 26 in which a drive member 25 is received. The hollow opens to the channel 24. The drive member 25 has enough space in the hollow 26 to perform the cyclic movement.

A friction member 28 that is connected to the housing 2 is resiliently urged towards a side surface of the rod 22 to maintain the position of the rod 22 (prevent movement of the rod 22) during the portion of the cyclic movement where the drive member 25 is not in contact with the side surface of the rod 22. In the present embodiment the friction member 28 is arranged within the length of the channel 24, but it is understood that the fish member can also be provided outside the length of the channel 24 and does not necessarily need to be connected to the housing 2 and instead could be connected to another entity in the vicinity linear actuator 20.

A first elongated SMA member 31 is connected mechanically and electrically at a first position 35 to the housing 2 and connected mechanically and electrically at a first attachment position 27 to the drive member 25. The first elongated SMA member 31 is for example an SMA wire.

A second elongated SMA member 32 is connected mechanically and electrically at a second position 36 to the housing 2 and connected mechanically and electrically at the first attachment position 27 to the drive member 25. The second elongated SMA member 32 is for example an SMA wire.

A third elongated SMA member 33 is connected mechanically and electrically at a third position 37 to the housing 2 and connected electrically and mechanically at the first attachment position 27 to the drive member 25. The third elongated SMA member 33 is for example an SMA wire.

A fourth elongated SMA member 34 is connected mechanically and electrically at a fourth position 38 to the housing 2 and connected mechanically and electrically at the first attachment position 27 to the drive member 25. The fourth elongated SMA member 34 is for example an SMA wire.

Alternatively, the first to fourth SMA members 31, 32, 33, 34 can be mechanically and electrically connected to the drive member 25 at individual attachment positions on the drive member 25. The attachment position 27 or the attachment positions provide for mechanical and electrical connection of the respective SMA member 31, 32, 33, 34 and for the electrical connection. Hereto, the attachment position 27 or attachment positions are connected via a resilient electric connector 30 to a negative electrode 39 in the housing 2.

The first, second, third and fourth positions 35, 36, 37, 38 are different positions on the housing 2 that are circumferentially distributed around an axis of the cyclic movement. The circumferential distribution does not need to be even, but the positions should be such that the respective elevated SMA members 31, 34, 33, 34 do not extend in the same direction from the drive member 25 but instead all have angles between them.

The first, second, third and fourth positions 35, 36, 37, 38 are each connected to positive electrodes in the housing 2, that are in turn connected to the positive electrodes 51 of the controller 50. The negative electrode 39 is connected to the negative electrode 52 of the controller.

Thus, the controller 50 is electrically connected to the first attachment position 27, to the first position 31 and to the second position 32, to the third position 33 and to the fourth position 34.

In an embodiment, the polarity of the electrodes is reversed.

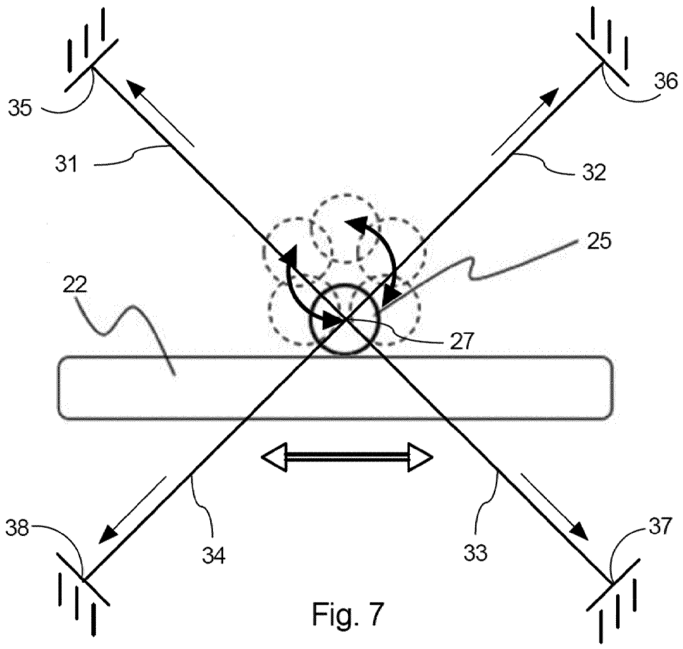

Fig. 7 is a diagrammatic representation of the operation of the linear actuator 20 of Fig. 6. The controller 50 is configured to activate and deactivate the respective SME members 31, 32, 33 and 34 sequentially, clockwise or anticlockwise, depending on the desired direction of linear movement of the rod 22. Activation of a SME member 31, 32, 33, 34, i.e. running an electric current to the SME member causes the SME member to heat and thereby contract (become shorter). The activation of the respective SME member 31, 32, 33, 34 causes the respective SME member 31, 32, 33, 34 to cool down and thereby extend (become longer). Clockwise activation followed by deactivation in a clockwise manner of the SMA members 31, 32, 33, 34 because the drive member 25 to make cyclic movement as illustrated by the interrupted lines in Fig. 7. In an embodiment, and SME member 31, 32, 33, 34 is deactivated before the next SME member 31, 32, 33, 34 is activated. In other embodiments the next SME member 31, 32, 33, 34 is activated before the presently active SME member 31, 32, 33, 34 is deactivated.

During the cyclic movement the drive member 25 is an intermittent frictional contact with a side surface of the rod 22. The frictional contact between the drive member and the side surface of the rod takes place when and around the position of the drive member 25 illustrated by the continuous line in Fig. 7. The cyclic movement ensures that the drive member 25 moves in the direction along the longitudinal axis of the rod 22 when it is in contact with the rods 22, thereby transmitting linear movement from the drive member 25 to the rods 22 (the linear movement is illustrated by the double arrow below rods 22).

According to the invention, friction between the friction member 28 and the side surface of the rod 22 is less than friction between the drive member 25 and the side surface of the rod when the drive member 25 is in contact with the rod 22.

In an embodiment the drive member 25 is provided with a surface area for contact with the side surface of the rod 22. This surface area and the side area each being provided with a material for creating friction during contact between said surface area and the side area.

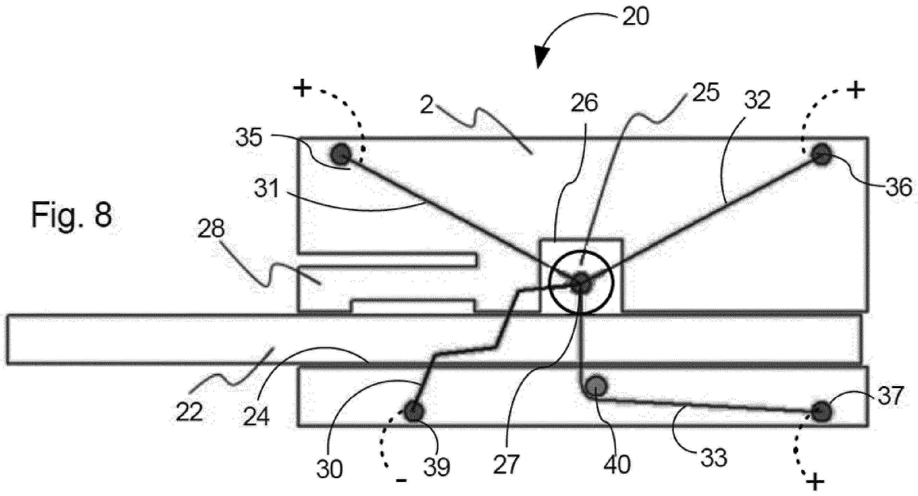

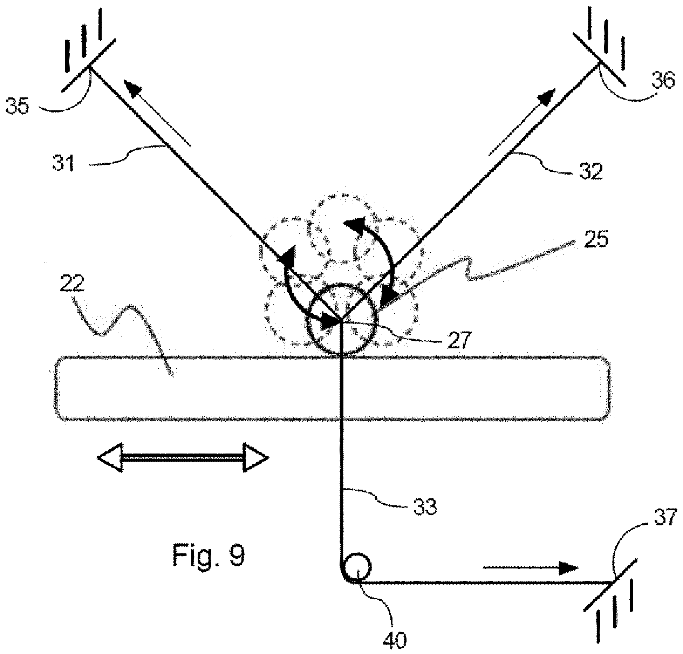

Figs. 8 and 9 illustrate another embodiment of the linear actuator 20. In this embodiment, structures and features that are the same or similar to corresponding structures and features previously described or shown herein are denoted by the same reference numeral as previously used for simplicity.

The embodiment of Figs. 8 and 9 is similar to the embodiment of Figs. 6 and 7, except that the actuator is provided with three elongated SMA members 31, 32 and 33 instead of four. This requires the direction in which the third and the SMA member 33 connects to the drive member 25 to be adjusted, which is in this embodiment achieved by a guide pin 40. Alternatively, the third position 37 could be moved to the position that is shown for the guide pin 40, to arrive in an embodiment without a guide pin.

The controller 50 is accordingly provided with three positive electrodes instead of four and one negative electrode (or in case of reversal of the electrodes with three negative electrodes and one positive electrode).

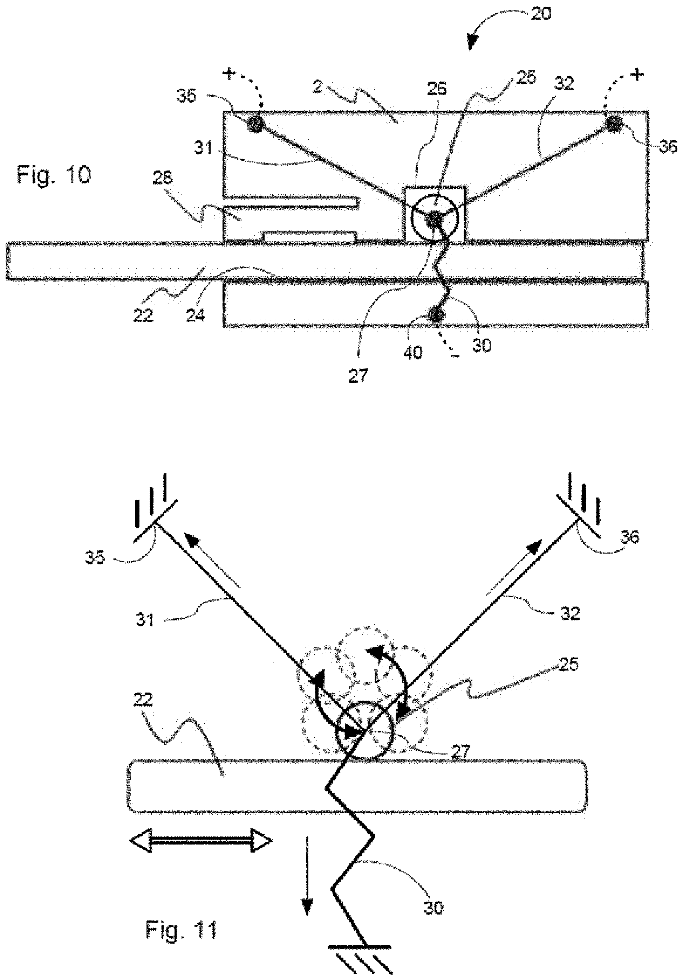

Figs. 10 and 11 illustrate another embodiment of the linear actuator 20. In this embodiment, structures and features that are the same or similar to corresponding structures and features previously described or shown herein are denoted by the same reference numeral as previously used for simplicity.

The embodiment of Figs. 10 and 11 is similar to the embodiment of Figs. 8 and 9, except that the actuator is provided with two elongated SMA members 31 and 32 instead of three. This requires a resilient member 30 to be connected in to the drive member 25 a direction at an angle to both the first elongated SMA member 31 and the second elongated SMA member 32. The resilient member 30 applies a resilient pulling force on the drive member 25 and thus keeps tension in the first and second elongated SMA members 31, 32. In the present case the resilient member 30 is formed by the flexible electrode 30. However, it is understood that the resilient member and the flexible electrode can be formed by separate entities. In this embodiment the first and second members 31, 32 have to contract against the force of the resilient member 30, as illustrated by the arrows in Fig. 11.

The controller 50 is accordingly provided with two positive electrodes instead of three and one negative electrode (or in case of reversal of the electrodes with two negative electrodes and one positive electrode).

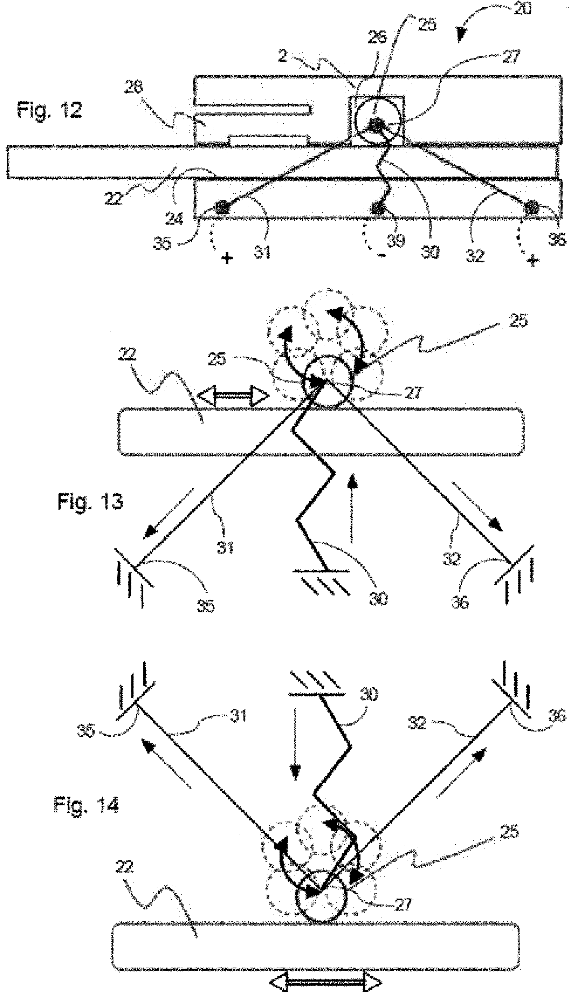

Figs. 12 and 13 illustrate another embodiment of the linear actuator 20. In this embodiment, structures and features that are the same or similar to corresponding structures and features previously described or shown herein are denoted by the same reference numeral as previously used for simplicity.

The embodiment of Figs. 12 and 13 is similar to the embodiment of Figs. 10 and 11, except that the direction in which the resilient member 30 is connected to the drive member 25 is reversed and applies a pushing force to the drive member 25 as opposed to a pulling force, and thus keeps tension in the first and second elongated SMA members 31, 32.

Fig. 14 illustrates another embodiment of the linear actuator 20. In this embodiment, structures and features that are the same or similar to corresponding structures and features previously described or shown herein are denoted by the same reference numeral as previously used for simplicity.

The embodiment of Fig. 14 is similar to the embodiment of Figs. 12 and 14, except that the first and second elongated SME members 31, 32 and the resilient member 32 not from the drive member 25 to the other side of the rod 22, but instead are arranged on the same side of the rod 22 where the drive member 25 contacts the side of the rods 22.

The various aspects and implementations have been described in conjunction with various embodiments herein. However, other variations to the disclosed embodiments can be understood and effected by those skilled in the art in practicing the claimed subject-matter, from a study of the drawings, the disclosure, and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measured cannot be used to advantage.

The reference signs used in the claims shall not be construed as limiting the scope.

## Claims

1. An actuator (20) for driving a lens of a camera system (1), said actuator (20) comprising:
a housing (2),
a drive member (25),
at least a first elongated SMA member (31) and a second elongated SMA member (32),
said first elongated SMA member (31) being connected mechanically and electrically both:
at a first position (35) to said housing (2), and
at a first attachment position (27) to said drive member (25),
said second elongated SMA member (32) being connected mechanically and electrically both:
at a second position (36) to said housing (2), said second position (36) being different from said first position (37), and
at a second attachment position (27') to said drive member,
a rod (22) with a side surface,
said rod (22) being slidably received in a channel (24) of said housing (2),
a friction member (28) resiliently urged into contact a side surface of said rod (22),
a controller (50) configured to contract and thereafter expand said first and second elongated SMA members (31, 32) sequentially for imparting cyclic movement on said drive member (25) by sequentially conducting electric current through said first and second elongated SMA members (31,32),
said drive member (25) being in intermittent frictional contact with said side surface of said rod (22) during said cyclic movement,
whereby said cyclic movement of said drive member (25) causes linear movement of said rod (22),
wherein friction between said friction member (28) and said side surface of said rod (22) is less than friction between said drive member (25) and said side surface of said rod (22) when said drive member (22) is in contact with said rod (25); and
wherein during said cyclic movement said friction member (28) is used to keep said rod (22) in position when said drive member (25) is not in contact with said side surface of said rod (22).

2. An actuator (20) according to claim 1, further comprising a resilient element connected to said housing at a specific position and to said drive member for urging said drive member in a direction at an angle to the longitudinal extent of both said first elongated SMA member and said second elongated SMA member, or the drive member being resilient and being resiliently biased by its resilience in a direction at an angle to the longitudinal extent of both said first elongated SMA member and said second elongated SMA member.

3. An actuator according to any one of the preceding claims, wherein said controller is electrically connected to said first attachment position, to said second attachment position, to said first position and to said second position.

4. An actuator according to any one of the preceding claims, wherein said first elongated SMA member is arranged at an angle to said second SMA member.

5. An actuator according to any one of the preceding claims, further comprising a third elongated SMA member, said third elongated SMA member being connected mechanically and electrically both:
at a third position to said housing, said third position being different from said first position and said second position, and
at a third attachment position on said drive member,
said controller being electrically connected to said third position, and
said controller being configured to contract and thereafter expand said first, second and third elongated SMA members sequentially for imparting cyclic movement on said drive member by sequentially conducting electric current through said first, second and third elongated SMA members.

6. An actuator according to claim 5, wherein said third elongated SMA member is arranged at an angle to first SMA member and at an angle to said second SMA member.

7. An actuator according to claim 5 or 6, further comprising a fourth elongated SMA member, said fourth elongated SMA member being connected mechanically and electrically both:
at a fourth position to said housing, said fourth position being different from said first position, said second position and said third position, and
at a fourth attachment position on said drive member,
said controller being electrically connected to said fourth position, and
said controller being configured to contract and thereafter expand said first, second, third and fourth elongated SMA members sequentially for imparting cyclic movement on said drive member by sequentially conducting electric current through said first, second, third and fourth elongated SMA members.

8. An actuator according to claim 7, wherein said fourth elongated SMA member is arranged at an angle to first SMA member, at an angle to said second SMA member and at an angle to said third SMA member.

9. An actuator according to any one of claims 1 to 8, wherein said first position, said second position, said third position and/or said fourth position are at a radial distance from an axis through said cyclic movement.

10. An actuator according to any one of claims 1 to 9, wherein said first attachment position, said second attachment position, said third attachment position and/or said fourth attachment position are at one and the same location on said drive member.

11. An actuator according to any one of claims 1 to 10, wherein said drive member is provided with a surface area for contact with said side surface of said rod, said surface area and said side area each being provided with a material for creating friction during contact between said surface area and said side area.

12. An actuator according to any one of the preceding claims, comprising a flexible electrical connection to said first, second, third and/or fourth attachment point.

13. An optical system (1) comprising a lens arrangement, said lens arrangement being actuated by an actuator according to any one of claims 1 to 12.

## Patentansprüche

1. Aktuator (20) zum Antreiben eines Objektivs eines Kamerasystems (1), wobei der Aktuator (20) Folgendes umfasst:
ein Gehäuse (2),
ein Antriebselement (25),
mindestens ein erstes längliches SMA-Element (31) und ein zweites längliches SMA-Element (32),
wobei das erste längliche SMA-Element (31) mechanisch und elektrisch verbunden ist, sowohl:
an einer ersten Position (35) mit dem Gehäuse (2), als auch an einer ersten Befestigungsposition (27) mit dem Antriebselement (25),
wobei das zweite längliche SMA-Element (32) mechanisch und elektrisch verbunden ist, sowohl:
an einer zweiten Position (36) mit dem Gehäuse (2), wobei sich die zweite Position (36) von der ersten Position (37) unterscheidet, als auch
an einer zweiten Befestigungsposition (27') mit dem Antriebselement,
einen Stab (22) mit einer Seitenfläche,
wobei der Stab (22) verschiebbar in einem Kanal (24) des Gehäuses (2) aufgenommen wird,
ein Reibungselement (28), das elastisch in Kontakt mit einer Seitenfläche des Stabs (22) gedrückt wird,
eine Steuerung (50), die dazu konfiguriert ist, das erste und das zweite längliche SMA-Element (31, 32) sequenziell zusammenzuziehen und danach auszudehnen, um dem Antriebselement (25) eine zyklische Bewegung durch sequenzielles Leiten von elektrischem Strom durch das erste und das zweite längliche SMA-Element (31,32) zu verleihen,
wobei das Antriebselement (25) während der zyklischen Bewegung in intermittierendem Reibungskontakt mit der Seitenfläche des Stabs (22) steht,
wobei die zyklische Bewegung des Antriebselements (25) eine lineare Bewegung des Stabs (22) bewirkt,
wobei die Reibung zwischen dem Reibungselement (28) und der Seitenfläche des Stabs (22) geringer als die Reibung zwischen dem Antriebselement (25) und der Seitenfläche des Stabs (22) ist, wenn das Antriebselement (22) in Kontakt mit dem Stab (25) steht; und
wobei das Reibungselement (28) während der zyklischen Bewegung verwendet wird, um den Stab (22) in Position zu halten, wenn das Antriebselement (25) nicht in Kontakt mit der Seitenfläche des Stabs (22) steht.

2. Aktuator (20) nach Anspruch 1, ferner umfassend ein elastisches Element, das mit dem Gehäuse an einer spezifischen Position und mit dem Antriebselement verbunden ist, um das Antriebselement in einer Richtung in einem Winkel zu der Längserstreckung sowohl des ersten länglichen SMA-Elements als auch des zweiten länglichen SMA-Elements zu drängen, oder wobei das Antriebselement elastisch ist und durch seine Elastizität in einer Richtung in einem Winkel zu der Längserstreckung sowohl des ersten länglichen SMA-Elements als auch des zweiten länglichen SMA-Elements elastisch vorgespannt ist.

3. Aktuator nach einem der vorhergehenden Ansprüche, wobei die Steuerung elektrisch mit der ersten Befestigungsposition, mit der zweiten Befestigungsposition, mit der ersten Position und mit der zweiten Position verbunden ist.

4. Aktuator nach einem der vorhergehenden Ansprüche, wobei das erste längliche SMA-Element in einem Winkel zu dem zweiten SMA-Element angeordnet ist.

5. Aktuator nach einem der vorhergehenden Ansprüche, ferner umfassend ein drittes längliches SMA-Element, wobei das dritte längliche SMA-Element mechanisch und elektrisch verbunden ist, sowohl:
an einer dritten Position mit dem Gehäuse, wobei sich die dritte Position von der ersten Position und der zweiten Position unterscheidet, als auch
an einer dritten Befestigungsposition mit dem Antriebselement, wobei die Steuerung elektrisch mit der dritten Position verbunden ist, und
wobei die Steuerung dazu konfiguriert ist, das erste, das zweite und das dritte längliche SMA-Element sequenziell zusammenzuziehen und danach auszudehnen, um dem Antriebselement eine zyklische Bewegung durch sequenzielles Leiten von elektrischem Strom durch das erste, das zweite und das dritte längliche SMA-Element zu verleihen.

6. Aktuator nach Anspruch 5, wobei das dritte längliche SMA-Element in einem Winkel zu dem ersten SMA-Element und in einem Winkel zu dem zweiten SMA-Element angeordnet ist.

7. Aktuator nach Anspruch 5 oder 6, ferner umfassend ein viertes längliches SMA-Element, wobei das vierte längliche SMA-Element mechanisch und elektrisch verbunden ist, sowohl:
an einer vierten Position mit dem Gehäuse, wobei sich die vierte Position von der ersten Position, der zweiten Position und der dritten Position unterscheidet, als auch
an einer vierten Befestigungsposition mit dem Antriebselement, wobei die Steuerung elektrisch mit der vierten Position verbunden ist, und
wobei die Steuerung dazu konfiguriert ist, das erste, das zweite, das dritte und das vierte längliche SMA-Element sequenziell zusammenzuziehen und danach auszudehnen, um dem Antriebselement eine zyklische Bewegung durch sequenzielles Leiten von elektrischem Strom durch das erste, das zweite, das dritte und das vierte längliche SMA-Element zu verleihen.

8. Aktuator nach Anspruch 7, wobei das vierte längliche SMA-Element in einem Winkel zu dem ersten SMA-Element, in einem Winkel zu dem zweiten SMA-Element und in einem Winkel zu dem dritten SMA-Element angeordnet ist.

9. Aktuator nach einem der Ansprüche 1 bis 8, wobei sich die erste Position, die zweite Position, die dritte Position und/oder die vierte Position in einem radialen Abstand von einer Achse durch die zyklische Bewegung befinden.

10. Aktuator nach einem der Ansprüche 1 bis 9, wobei sich die erste Befestigungsposition, die zweite Befestigungsposition, die dritte Befestigungsposition und/oder die vierte Befestigungsposition an ein und derselben Stelle auf dem Antriebselement befinden.

11. Aktuator nach einem der Ansprüche 1 bis 10, wobei das Antriebselement mit einem Oberflächenbereich zum Kontakt mit der Seitenfläche des Stabs versehen ist, wobei der Oberflächenbereich und der Seitenbereich jeweils mit einem Material zum Erzeugen von Reibung während des Kontakts zwischen dem Oberflächenbereich und dem Seitenbereich versehen sind.

12. Aktuator nach einem der vorhergehenden Ansprüche, umfassend eine flexible elektrische Verbindung mit dem ersten, dem zweiten, dem dritten und/oder dem vierten Befestigungspunkt.

13. Optisches System (1), umfassend eine Objektivanordnung, wobei die Objektivanordnung durch einen Aktuator nach einem der Ansprüche 1 bis 12 betätigt wird.

## Revendications

1. Actionneur (20) destiné à commander un objectif d'un système de caméra (1), ledit actionneur (20) comprenant :
un boîtier (2),
un élément de commande (25),
au moins un premier élément SMA allongé (31) et un deuxième élément SMA allongé (32),
ledit premier élément SMA allongé (31) étant relié mécaniquement et électriquement à la fois :
à une première position (35) par rapport audit boîtier (2), et
à une première position de fixation (27) par rapport audit élément de commande (25),
ledit deuxième élément SMA allongé (32) étant relié mécaniquement et électriquement à la fois :
à une deuxième position (36) par rapport audit boîtier (2), ladite deuxième position (36) étant différente de ladite première position (37), et
à une deuxième position de fixation (27') par rapport audit élément de commande,
une tige (22) avec une surface latérale,
ladite tige (22) étant reçue de manière coulissante dans un canal (24) dudit boîtier (2),
un élément de frottement (28) poussé de manière élastique pour entrer en contact avec une surface latérale de ladite tige (22), un dispositif de commande (50) configuré pour contracter puis dilater séquentiellement lesdits premier et deuxième éléments SMA allongés (31, 32) pour imprimer un mouvement cyclique sur ledit élément de commande (25) en conduisant séquentiellement un courant électrique à travers lesdits premier et deuxième éléments SMA allongés (31, 32),
ledit élément de commande (25) étant en contact de frottement intermittent avec ladite surface latérale de ladite tige (22) au cours dudit mouvement cyclique,
moyennant quoi ledit mouvement cyclique dudit élément de commande (25) provoque le mouvement linéaire de ladite tige (22),
dans lequel le frottement entre ledit élément de frottement (28) et ladite surface latérale de ladite tige (22) est inférieur au frottement entre ledit élément de commande (25) et ladite surface latérale de ladite tige (22) lorsque ledit élément de commande (22) est en contact avec ladite tige (25) ; et
dans lequel au cours dudit mouvement cyclique, ledit élément de frottement (28) est utilisé pour maintenir ladite tige (22) en position lorsque ledit élément de commande (25) n'est pas en contact avec ladite surface latérale de ladite tige (22).

2. Actionneur (20) selon la revendication 1, comprenant en outre un élément élastique relié audit boîtier à une position spécifique et audit élément de commande pour pousser ledit élément de commande dans une direction selon un angle par rapport à l'étendue longitudinale à la fois dudit premier élément SMA allongé et dudit deuxième élément SMA allongé, ou l'élément de commande étant élastique et étant sollicité de manière élastique par son élasticité dans une direction selon un angle par rapport à l'étendue longitudinale à la fois dudit premier élément SMA allongé et dudit deuxième élément SMA allongé.

3. Actionneur selon l'une quelconque des revendications précédentes, dans lequel ledit dispositif de commande est relié électriquement à ladite première position de fixation, à ladite deuxième position de fixation, à ladite première position et à ladite deuxième position.

4. Actionneur selon l'une quelconque des revendications précédentes, dans lequel ledit premier élément SMA allongé est disposé selon un angle par rapport audit deuxième élément SMA.

5. Actionneur selon l'une quelconque des revendications précédentes, comprenant en outre un troisième élément SMA allongé, ledit troisième élément SMA allongé étant relié mécaniquement et électriquement à la fois :
à une troisième position par rapport audit boîtier, ladite troisième position étant différente de ladite première position et de ladite deuxième position, et
à une troisième position de fixation sur ledit élément de commande,
ledit dispositif de commande étant relié électriquement à ladite troisième position, et
ledit dispositif de commande étant configuré pour contracter puis dilater séquentiellement lesdits premier, deuxième et troisième éléments SMA allongés pour imprimer un mouvement cyclique sur ledit élément de commande en conduisant séquentiellement un courant électrique à travers lesdits premier, deuxième et troisième éléments SMA allongés.

6. Actionneur selon la revendication 5, dans lequel ledit troisième élément SMA allongé est disposé selon un angle par rapport au premier élément SMA et selon un angle par rapport audit deuxième élément SMA.

7. Actionneur selon la revendication 5 ou 6, comprenant en outre un quatrième élément SMA allongé, ledit quatrième élément SMA allongé étant relié mécaniquement et électriquement à la fois :
à une quatrième position par rapport audit boîtier, ladite quatrième position étant différente de ladite première position, de ladite deuxième position, et de ladite troisième position, et
à une quatrième position de fixation sur ledit élément de commande,
ledit dispositif de commande étant relié électriquement à ladite quatrième position, et
ledit dispositif de commande étant configuré pour contracter puis dilater séquentiellement lesdits premier, deuxième, troisième et quatrième éléments SMA allongés pour imprimer un mouvement cyclique sur ledit élément de commande en conduisant séquentiellement un courant électrique à travers lesdits premier, deuxième, troisième et quatrième éléments SMA allongés.

8. Actionneur selon la revendication 7, dans lequel ledit quatrième élément SMA allongé est disposé selon un angle par rapport au premier élément SMA, selon un angle par rapport audit deuxième élément SMA et selon un angle par rapport audit troisième élément SMA.

9. Actionneur selon l'une quelconque des revendications 1 à 8, dans lequel ladite première position, ladite deuxième position, ladite troisième position et/ou ladite quatrième position sont à une distance radiale d'un axe passant par ledit mouvement cyclique.

10. Actionneur selon l'une quelconque des revendications 1 à 9, dans lequel ladite première position de fixation, ladite deuxième position de fixation, ladite troisième position de fixation et/ou ladite quatrième position de fixation sont à un seul et même emplacement sur ledit élément de commande.

11. Actionneur selon l'une quelconque des revendications 1 à 10, dans lequel ledit élément de commande est pourvu d'une surface de contact avec ladite surface latérale de ladite tige, ladite surface et ladite surface latérale étant chacune pourvue d'un matériau destiné à créer un frottement lors du contact entre ladite surface et ladite surface latérale.

12. Actionneur selon l'une quelconque des revendications précédentes, comprenant une connexion électrique flexible auxdits premier, deuxième, troisième et/ou quatrième points de fixation.

13. Système optique (1) comprenant un agencement d'objectifs, ledit agencement d'objectifs étant actionné par un actionneur selon l'une quelconque des revendications 1 à 12.
